(19)

Europäisches
Patentamt
European
Patent Office
Office européen
des brevets

(11)  **EP 2 159 974 B1**

(12)  **EUROPEAN PATENT SPECIFICATION**

(45) Date of publication and mention
of the grant of the patent:
**16.01.2013  Bulletin 2013/03**

(51) Int Cl.:
*H04L 12/715* (2013.01)  *H04L 12/725* (2013.01)
*H04L 12/851* (2013.01)

(21) Application number: **08290804.7**

(22) Date of filing: **27.08.2008**

(54) **Multi-domain routing using an ant colony algorithm**

Multi-Domänen-Wegelenkung anhand eines Ameisenkoloniealgorithmus

Routage multi-domaine sur la base d'un algorithme de colonie de fournis

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**03.03.2010  Bulletin 2010/09**

(73) Proprietor: **Alcatel Lucent
75007 Paris (FR)**

(72) Inventors:
• **Pouyllau, Hélia
91580 Etrechy (FR)**
• **Djarallah, Nabil Bachir
91600 Savigny sur Orge (FR)**

(74) Representative: **Croonenbroek, Thomas Jakob
Cabinet Innovincia
11, avenue des Tilleuls
74200 Thonon-les-Bains (FR)**

(56) References cited:
**US-A1- 2008 049 751**

• **ZHANG SUBING ET AL: "A qos routing algorithm
based on ant algorithm" ICC 2001. 2001 IEEE
INTERNATIONAL CONFERENCE ON
COMMUNICATIONS. CONFERENCE RECORD.
HELSINKY, FINLAND, JUNE 11 - 14, 2001; [IEEE
INTERNATIONAL CONFERENCE ON
COMMUNICATIONS], NEW YORK, NY : IEEE, US,
vol. 5, 11 June 2001 (2001-06-11), pages
1581-1585, XP010553781 ISBN:
978-0-7803-7097-5**

• **MUKHOPADHYAY, I. POUYLLAU, H.:
"DISTRIBUTED OPTIMIZATION ALGORITHMS
FOR X-DOMAIN END-TO-END QOS
NEGOTIATION" DOI 10.1109/AICT.2008.48, 20
June 2008 (2008-06-20), pages 7-12, XP002504156
Fourth Advanced International Conference on
Telecommunications, 2008. AICT '08. ISBN:
978-0-7695-3162-5**

• **POUYLLAU H ET AL: "X-domain QoS budget
negotiation using Dynamic Programming"
TELECOMMUNICATIONS, 2005. AICT-ICIW '06.
INTERNATIONAL CONFERENCE ON I NTERNET
AND WEB APPLICATIONS AND SERVICES/
ADVANCED INTERNATIONAL CONFE RENCE
ON GUADELOPE, FRENCH CARIBBEAN 19-25
FEB. 2006, PISCATAWAY, NJ, USA,IEEE, 19
February 2006 (2006-02-19), pages 35-35,
XP010898523 ISBN: 978-0-7695-2522-8**

• **LING QIN ET AL: "A New Way of Solving Multiple
Constrained QoS Multi-routing Problems"
COMPUTER AND COMPUTATIONAL SCIENCES,
2006. IMSCCS '06. FIRST INTERNATI ONAL
MULTI-SYMPOSIUMS ON HANGZHOU,
ZHEJIANG, CHINA 20-24 APRIL 2006,
PISCATAWAY, NJ, USA,IEEE, vol. 1, 20 June 2006
(2006-06-20), pages 668-675, XP010925593 ISBN:
978-0-7695-2581-5**

**Description**

BACKGROUND OF THE INVENTION

The present invention relates to the field of communication networks and more specifically of inter-domain services.

Inter-domain communications are of great importance as they would allow network operators to increase their revenues. However, inter-domain communications introduce new technical constraints to overcome in order to provide confidentiality and to guarantee a certain level of Quality of Service (QoS) from source to target under a potentially huge amount of demands.

In the state of the art, solutions have been offered to cope with these constraints such that the document "X-domain QoS budget negotiation using dynamic programming", IEEE Advanced international conference on telecommunications (AICT), 2006 by H.Pouyllau, L.Ciarletta, A. Aghasaryan and S.Haar where dynamic programming principles are applied in a distributed manner or "Distributed Optimization algorithms for X-Domain end-to-end QoS negotiation". AICT 2008 by I. Mukhopadhyay and H Pouyllau. The drawback of thiese methods is the complexity of the algorithm producing a low runtime performance.

Another solution is described in "End-to-end quality of service provisioning through inter-provider traffic engineering", Computer communications, 2006, 29, 683-702 by M.P.Howarth, M.Boucadair, P.Flegkas, N.Wang, G.Pavlou, P.Morand, T.Coadic, D.Griffin, A.Asgari and P.Georgatsos wherein genetic heuristic algorithms are applied which improve the runtime performances but this method is centralized and prevents from insuring inter-domain confidentiality.

A further solution is described in the patent application US 2008/0049751 and refers to a method, and system for computing AS-disjoint inter-AS traffic engineering-label switched path (TE-LSPS).

Besides, "A QoS routing algorithm based on ant algorithm", ICC, 2001 by Zhang Subing and Liu Zemin refers to an ant algorithm for routing purpose taking into account QoS constraints.

SUMMARY OF THE INVENTION

It is therefore an object of the present invention to overcome the precited drawbacks of the state of the art and provide a method allowing to insure confidentiality, QoS and good runtime performances. Thus, the present invention refers to a method for establishing a connection from an ingress node to an egress node in multi-domain networks allowing the application of end-to-end Quality of Service (QoS) constraints wherein QoS constraints are defined by Service Level Agreements (SLAs) and wherein path computations are achieved by an ant algorithm.

In another embodiment, said method is a distributed method so that each domain concerned by the end-to-end QoS request achieves a part of the SLA computation.

In a further embodiment, said path computation is a multidimensional constrained path.

The ants comprise the non-exhaustive following list of parameters:

- an ant ID,
- a source ID,
- a target ID,
- a selection criterion, a remaining QoS parameter and a total cost parameter,
- the remaining QoS allowing thus to preserve confidentiality of the QoS constraints of the other domains.

In a further embodiment, the ants also comprise the non-exhaustive following list of parameters:

- at least a pheromone weighting parameter,
- a pheromone evaporation parameter,
- a parameter of the minimum level of pheromones,
- a parameter of the maximum level of pheromones,

In another embodiment, said ant algorithm is a heuristic algorithm.

In a further embodiment, path computation is achieved at a service layer.

In an additional embodiment, path computation is achieved by Path Computation Elements (PCEs).

Moreover, the present invention concerns path computation element (PCE) of a network domain wherein said path computation element is able to receive and process a path computation request (PCreq) coming from another network domain, said path computation being based on an ant algorithm.

In another embodiment, the path computation element (PCE) of the target domain selects a preferred path in function of at least one selection parameter.

## BRIEF DESCRIPTION OF THE DRAWINGS

FIG.**1** is a diagram of a multi-domain network with, on one side, the possible paths and, on the other side, the ant selected paths;

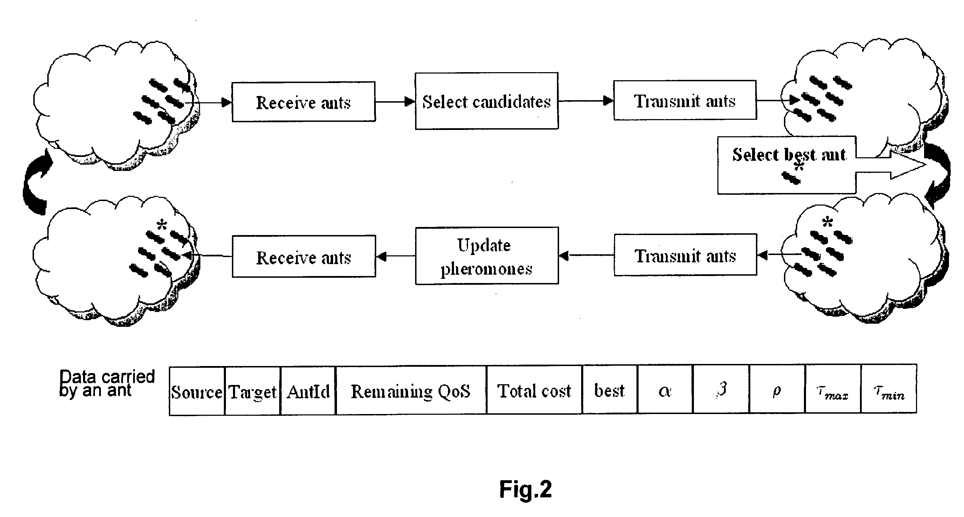

FIG.**2** is a diagram representing the ant algorithm mechanism;
FIG.**3** is a block diagram representing the different steps of the present invention;
FIG.**4** is a diagram representing an example of ant algorithm mechanism;

## DETAILED DESCRIPTION OF THE INVENTION

As used herein, the term "domain" refers to a logical division of a computer network, in which all nodes can reach each other by broadcasting at the data link layer.

As used herein, the term "QoS" refers to the acronym Quality of Service.

As used herein, the term "element" or "service element (SE)" refers to a QoS contract.

As used herein, the term "SLA" refers to the acronym Service Level Agreement.

As used herein, the term "PCEP" refers to the acronym Path Computation Element Protocol.

As used herein, the term "ant" or "mobile agent" refers to a data packet capable of finding a route from a source network node to a target network node according to a probabilistic routing and capable of determining and registering the features of the selected path.

As used herein, the term "pheromones" refers to a factor representative of the relevancy of an element in function of the requested constraints among the elements selected by the set of ants. This factor is associated with an element and is modified each time an ant selects the corresponding element. Thus, it is a cumulative factor that influences and is modified by the ant path selection.

As used herein, the term "ant algorithm" refers to a path computation wherein the design is based on Ant colony Algorithm (ACO) which exploits the mechanisms behind the shortest path behavior observed in ant colonies to define a nature-inspired metaheuristic for combinatorial optimization. ACO features a multi-agent organization, stigmergic communication among the agents, distributed operations and use of stochastic decision policy to construct solutions.

The present invention refers to the use of an ant algorithm in order to find the best path under multiple constraints according to a selection criterion and to establish a connection in a multi-domain network.

In order to ensure an end-to-end QoS, contracts or service elements defining the thresholds of the QoS parameters are established between the different domains. These contracts are called Service Level Agreement (SLA) and can gather several constraints concerning the features of the connection as, for example, a minimum bandwidth, a maximum delay or jitter, a limit on price or a maximum dispersion along the path. Thus, an end-to-end service requires, for each domain crossed by the service, to commit an SLA. As the offered solution is distributed, each domain achieves a part of the SLA computation. In fact, as the present invention is based on an Ant Colony Optimization (ACO), each domain computes a part of said ACO algorithm.

In each domain, the ACO algorithm allows to select paths taking into account multidimensional constraints. Indeed, the required QoS may be defined by several parameters. Such ACO computation leads to a SLA combination that optimizes a cost function.

The ACO algorithm is heuristic with a linear complexity which presents therefore good runtime performances. However, as one of the parameter of the ACO algorithm is the number of cycles achieved by the ant colony, the quality of the selected solution can be chosen by adjusting said number of cycles. Moreover, the number of ants sent for exploring the network also allows to adjust the quality of the solution.

To better understand the present invention, an example will be described hereafter.

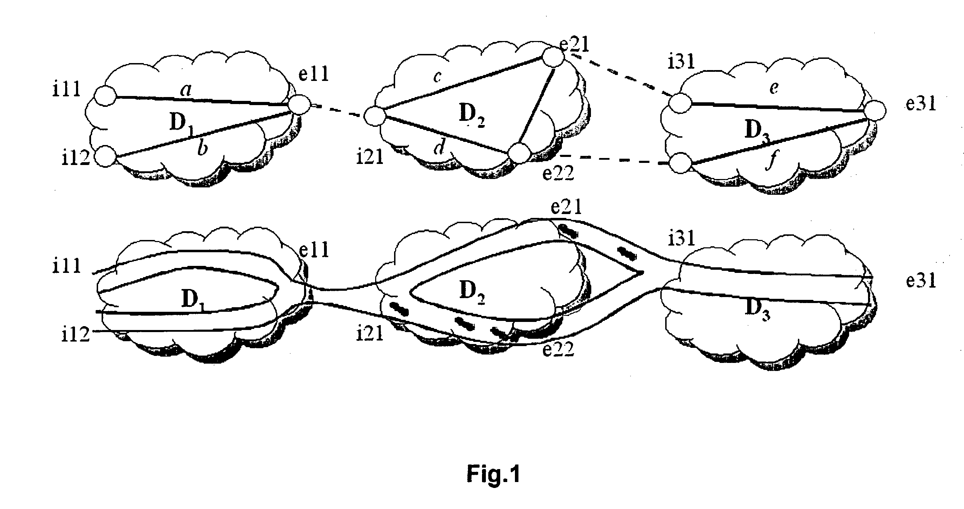

Fig.1 represents an example of a network comprising three domains D1, D2 and D3. Each domain comprises some ingress and egress nodes connected to each other as described by the links a, b, c, d, e and f. Thus, if a service request requires to connect node i11 or node i 12 of domain D1 to node e31 of domain D3, an ACO algorithm will be launched in order to select paths corresponding to the SLA requirements. ACO corresponds to the forwarding of a set of mobile agents or ants from source to target. The path chosen by each agent being determined by probabilistic parameters.

Such path selection is represented by the lower part of Fig.1. The ACO algorithm is computed in each domain in a distributed manner to find the paths going from its ingress nodes to its egress nodes and respecting the SLA rules.

In a first embodiment of the present invention, the computation is achieved by Path Computation Elements (PCE) located in each domain which communicate through a specific protocol called PCEP. Nevertheless, it has to be noted that other embodiments realizing the path computation at a different layer level (management or control plane layer for example) are possible if an interface allowing inter-carrier communications exists.

The ACO algorithm is set up by different parameters such as:

- a number of ants *NbAnts*,
- a number of cycles *NbIterations* which corresponds to the number of times the ants are browsing the inter-domain network,
- two weighting parameters $\alpha$ and $\beta$ to control, respectively, the influence of pheromones and of a heuristic factor,
- a parameter *best* to record the optimal criterion value (the initial value of the parameter *best* is 0),
- a parameter *p* to set up the persistence of the pheromones,
- two parameters $\tau_{min}$ and $\tau_{max}$ used to initiate the level of pheromones,

Each ant is also associated with:

- a factor representative of the remaining QoS which corresponds to the decomposition of QoS requirements by a random local SLA. The choice of the remaining QoS allows to preserve the confidentiality of the offered QoS of a domain with respect to the other domains,
- a factor representative of the total cost of the randomly selected SLA,
- an ID parameter,
- source and target definition,

In the ACO process, a set of NbAnts ants is launched at the source domain (D1 in the present example), the ant candidates respecting the SLA are selected and ants are transmitted to the next domain (D2). The ants are then transmitted from domain to domain through the network until they reach the target node (e31) of the target domain (D3). The ants are then classified with respect to a selection parameter and the best ant is selected. The ants are then transmitted backward in order to update pheromone's parameters at the PCEs. Indeed, in practice, pheromones are represented by factors of the algorithm computed by the PCE and are associated with each element of each domain. Said pheromones are updated by the ants on their way back to the source node.
Ants corresponding to the best solutions, that is to say solutions minimizing a cost parameter, will receive a high level of pheromones whereas ants corresponding to bad solutions will receive only a small part of pheromones. Therefore, pheromones of the path computation algorithm of the PCE will be updated in order to favour paths corresponding to the ants having a high level of pheromones.
When the ants come back to the source node, a cycle has been achieved. Then, depending on the selected number of cycles, the process can be reiterated. At each cycle, the ants are more likely to take paths where the quantities of pheromones are the highest. Thus, the more cycles you do and the higher the number of ants you choose, the more optimal solution you get.
In oder to precise a possible embodiment of the present invention, details about the algorithm will now be described.
Considering a domain $D_i$ comprising a set of service elements noted $S_i$, each service element $S_i^j$ is a vector of numerical components representing values of QoS thresholds such that

$$S_i^j \equiv \left\langle w_i^1 j, ..., w_i^K j \right\rangle$$

where $w_i^{kj}$, k=1,...,K represents the k-th QoS threshold value of the element j of the i-th domain.
Said domain $D_i$ with i=1,...,M (where M is the number of domains) proposing an element j with j=1,...,$|S_i|$, an ant Ag with g=1,...,NbAnts, the heuristic factor can be defined as followed:

$$\gamma_{Ag}(j) = \begin{cases} Z_j \ if \ \forall k = 1, ..., K, d_{Ag}(k) - w_i^{kj} \geq 0 \\ -Z_j \, otherwise \end{cases}$$

where k is the number of constraints and $d_{Ag}(k)$ the remaining capacity the ant Ag can carry for dimension k and Z the function that we want to maximize such as the profit.
The heuristic factor expresses both the validity of an element and the value added by its selection.
Using the different parameters described previously, the algorithm can be described as followed:

- While the number of iterations is not reached do

- For each ant Ag, g=1,...,NbAnts, do

1) Select randomly a domain $D_{i'}$, i'=1,...,M and an element j, j=1,...,$|S'_i|$
2) $A_g \leftarrow \{j\}$; domains $\leftarrow \{D_i|i=1,...,M, i \neq i'\}$;
3) *For each $D_i \in$ domains*

    a) Select j, j=1,...,$|S_i|$ so that

$$p_{Ag}(j) = max_j \frac{(|\varphi(j)|^\alpha \cdot |\gamma_{Ag}(j)|^\beta)}{\sum_{j'=1, j' \neq j}^{|S_i|} (|\varphi(j')|^\alpha \cdot |\gamma_{Ag}(j')|^\beta)}$$

    where $p_{Ag}(j)$ is the probability for the ant Ag to select the element j and $\varphi(j)$ represents the pheromones dropped on the element j
    b) $A_g \leftarrow A_g \cup \{j\}$

    4) Update pheromones, using $A^*$ the ant maximizing Z,

for each element j,

$$\varphi(j) \leftarrow \rho \cdot \sum_{g=1, g \in A_s}^{NbAnts} 1/[1+Z(A^*) - Z(A_g)]$$

*if $\varphi(j) > \tau_{max}$, $\varphi(j) \leftarrow \tau_{max}$*
*if $\varphi(j) < \tau_{min}$, $\varphi(j) \leftarrow \tau_{min}$*

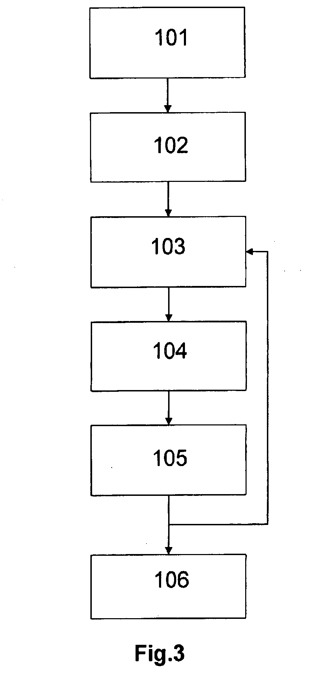

To illustrate the previous equations, the different steps of the offered method, represented on Fig.3, will now be described.

The first step (101) is the reception from a customer of an end-to-end service request. Said request comprises the application chosen by the customer and the features associated with the service. Said features comprise, for example, minimum bandwidth, signal quality and limit of price.

The ACO computation is then launched from the source domain (102).

A first sweep is then realized wherein the set of ants is transmitted, from domain to domain, to target (103). During this sweep, the required QoS, which is selected using a probability value computed using the heuristic and the pheromonal factor, to achieve transmission through the current domain is deducted from the remaining QoS and the cost is added to the total cost.

At destination, a computational treatment is achieved among the set of ants to select the ones having a positive remaining QoS. Among these selected ants, the one having the smallest total cost is defined as the best ant. The parameter best is updated according to the results of the selection and will be used to determine the level of granted pheromones (step 104).

A second sweep in the backward direction is achieved (105) wherein each domain updates the pheromones of the SLA associated to the ants.

The combination of both first and second sweeps constitutes a cycle. Thus, steps 103, 104 and 105 are done repeatedly until the predefined number of cycles is achieved.

At the end of all cycles, the path of the best ant is selected and the connection is established through this path (106).

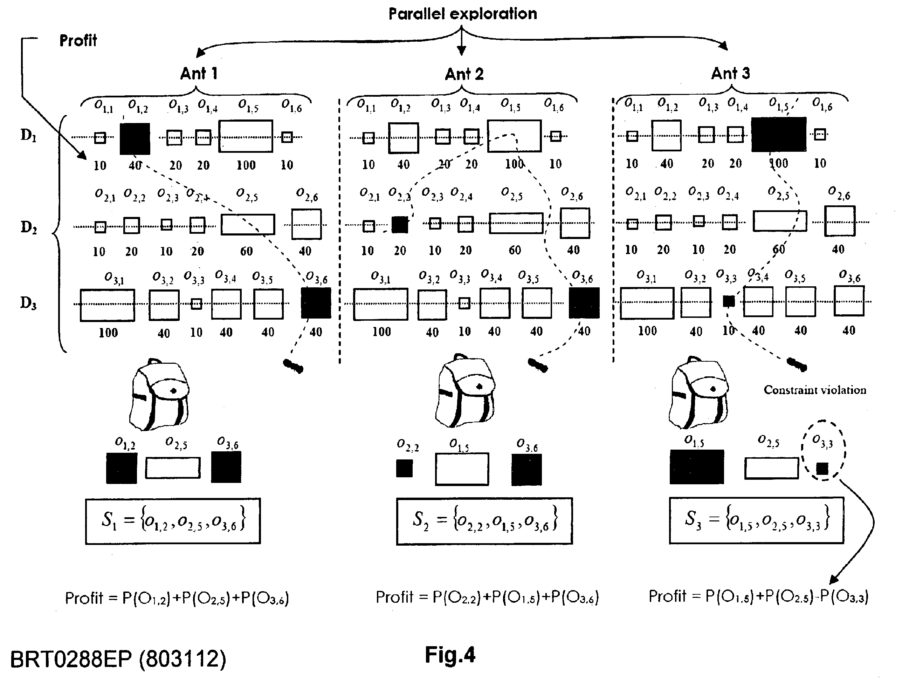

Fig.4 shows an example of an iteration of the ant exploration according to the previous algorithm. In this example, three different ants are launched through a network comprising three different domains. Ant 1 has randomly chosen domain D1 and element $o_{1,2}$, then domain D2 and element $o_{2,5}$, and finally, the element $O_{3,6}$ of domain D3. The element $O_{3,6}$ maximizes the profit without exceeding the capacity. It has to be noted that each time an element is selected, the other ones of the same domain are removed from the research space. Ant 2 explores domain D2 first then D 1 and D3. The fact that ants 1 and 2 have chosen the same element on domain D3 will lead to drop a higher quantity of pheromones on this element. Ant 3 depicts the case of a solution that does not respect the request requirements: the elements selected on domains D1 and D2 forbid the selection of a valid element in D3. In this case, due to the heuristic factor computation, all elements of domain 3 have negative profits. Therefore, the algorithm selects the element with the smallest profit value which is element $O_{3,3}$. This does not impact the global quality of the response. Indeed, the objective function value of the third ant is far from the highest profit value. Thus, the third ant elements do not receive high pheromone trails.

In another embodiment, an alternate algorithm can be used wherein groups of ants are sent simultaneously from each domain and explore all concerned domains to build chains of SLAs. The aim of sending several groups of ants that use pheromones from other ant groups is to provide a solution that converge faster to an optimal solution.

Thus, the present invention allows, by combining the requirements of inter-domain communications, in particular confidentiality of the domains features, and the use of ant algorithm, to offer a method providing inter-domain end-to-end QoS with very good runtime performances.

## Claims

1. Method for establishing a connection from an ingress node to an egress node in multi-domain networks allowing the application of end-to-end Quality of Service - subsequently abbreviated as QoS - constraints wherein QoS constraints are defined by Service Level Agreements - subsequently abbreviated as SLAs -, path computations being achieved by a heuristic ant algorithm wherein the ants of said algorithm comprise the non-exhaustive following list of parameters:

   - an ant ID,
   - a source ID,
   - a target ID,
   - a selection criterion,- a remaining QoS parameter allowing thus to preserve confidentiality of the QoS constraints of the other domains and,
   - a total cost parameter,

   said method comprising the following steps:
   - the ants are transmitted from domain to domain, said domains having ingress and egress nodes connected to each other by links, the required QoS for a link being deducted from the remaining QoS parameter and the cost of a link being added to the total cost parameter,
   - at destination, the ants having a positive remaining QoS are selected and a level of granted pheromones is determined,
   - the ants are transmitted backward to update pheromones level.

2. Method for establishing a connection from an ingress node to an egress node in multi-domain networks in accordance with claim 1 wherein said method is a distributed method so that each domain concerned by the end-to-end QoS request achieves a part of the SLA computation.

3. Method for establishing a connection from an ingress node to an egress node in multi-domain networks in accordance with claims 1 or 2 wherein said path computation is a multidimensional constrained path.

4. Method for establishing a connection from an ingress node to an egress node in multi-domain networks in accordance with one of the previous claims wherein the ants also comprise the non-exhaustive following list of parameters:

   - at least a pheromone weighting parameter,
   - a pheromone evaporation parameter,
   - a parameter of the minimum level of pheromones,
   - a parameter of the maximum level of pheromones,

5. Method for establishing a connection from an ingress node to an egress node in multi-domain networks in accordance with one of the previous claims wherein path computation is achieved at a service layer.

6. Method for establishing a connection from an ingress node to an egress node in multi-domain networks in accordance with one of the previous claims wherein path computation is achieved by Path Computation Elements - subsequently abbreviated as PCEs -.

7. Path computation element - subsequently abbreviated as PCE- of a network domain wherein said path computation element is able to receive and process a path computation request - subsequently abbreviated as Pcreq - coming from another network domain, said path computation being based on an ant algorithm, said path computation element comprising processing means configured to perform:

- a transmission from domain to domain of the ants, said domains having ingress and egress nodes connected to each other by links, each ant comprising a remaining QoS parameter and a total cost parameter,
- the deduction of the required QoS for a link from the remaining QoS parameter -
- the addition of the cost of a link to the total cost parameter,
- at destination, the selection of the ants having a positive remaining QoS and the determination a level of granted pheromones,
- the update of the pheromones level along the ant paths.

**8.** Path computation element of a network domain in accordance with claim 7 wherein the PCE of the target domain selects a preferred path in function of at least one selection parameter.

## Patentansprüche

**1.** Verfahren zur Herstellung einer Verbindung von einem Eingangsknoten zu einem Ausgangsknoten in Multi-Domain-Netzwerken, welche die Anwendung von Ende-zu-Ende-Dienstgütenbeschränkungen - nachfolgend abgekürzt als QoS-Beschränkungen bezeichnet - ermöglichen, wobei die QoS-Beschränkungen durch Dienstgütevereinbarungen - nachfolgend abgekürzt als SLAs bezeichnet - definiert sind, wobei Pfadberechnungen unter Anwendung eines heuristischen Ameisenalgorithmus durchgeführt werden, wobei die Ameisen des besagten Algorithmus die folgende nicht erschöpfende Liste von Parametern umfassen:

- Eine Ameisen-ID,
- eine Quell-ID,
- eine Ziel-ID,
- ein Auswahlkriterium,
- ein Parameter für die verbleibende QoS, welcher es ermöglicht, die Vertraulichkeit der QoS-Beschränkungen der anderen Domains zu wahren, und
- ein Gesamtkostenparameter,

wobei das besagte Verfahren die folgenden Schritte umfasst:
- Die Ameisen werden von Domain zu Domain übertragen, wobei die besagten Domains Eingangs- und Ausgangsknoten aufweisen, die über Verbindungsabschnitte miteinander verbunden sind, wobei die geforderte QoS für einen Verbindungsabschnitt von dem Parameter der verbleibenden QoS abgezogen und die Kosten einer Verbindung zu dem Gesamtkostenparameter hinzuaddiert werden,
- am Zielort werden diejenigen Ameisen, die eine positive verbleibende QoS aufweisen, ausgewählt, und es wird ein Pegel von zugeteilten Pheromonen bestimmt,
- die Ameisen werden rückwärts übertragen, um den Pheromonpegel zu aktualisieren.

**2.** Verfahren zur Herstellung einer Verbindung von einem Eingangsknoten zu einem Ausgangsknoten in Multi-Domain-Netzwerken gemäß Anspruch 1, wobei das besagte Verfahren ein verteiltes Verfahren ist, so dass jede von der Ende-zu-Ende-QoS-Anforderung betroffene Domain einen Teil der SLA-Berechnung durchführt.

**3.** Verfahren zur Herstellung einer Verbindung von einem Eingangsknoten zu einem Ausgangsknoten in Multi-Domain-Netzwerken gemäß Anspruch 1 oder 2, wobei die besagte Pfadberechnung ein multidimensional eingeschränkter Pfad ist.

**4.** Verfahren zur Herstellung einer Verbindung von einem Eingangsknoten zu einem Ausgangsknoten in Multi-Domain-Netzwerken gemäß einem der vorstehenden Ansprüche, wobei die Ameisen ebenfalls eine nicht erschöpfende Liste der folgenden Parameter umfassen:

- Mindestens ein Pheromongewichtungsparameter,
- ein Pheromonverdunstungsparameter,
- ein Parameter des minimalen Pheromonpegels,
- ein Parameter des maximalen Pheromonpegels.

**5.** Verfahren zur Herstellung einer Verbindung von einem Eingangsknoten zu einem Ausgangsknoten in Multi-Domain-Netzwerken gemäß einem der vorstehenden Ansprüche, wobei die Pfadberechnung an einer Dienstschicht erfolgt.

**6.** Verfahren zur Herstellung einer Verbindung von einem Eingangsknoten zu einem Ausgangsknoten in Multi-Domain-Netzwerken gemäß einem der vorstehenden Ansprüche, wobei die Pfadberechnung durch Pfadberechnungselemente - nachfolgend abgekürzt als PCEs bezeichnet - erfolgt.

7. Pfadberechnungselement - nachfolgend abgekürzt als PCE bezeichnet - einer Netzwerk-Domain, wobei das besagte Pfadberechnungselement fähig ist, eine von einer anderen Netzwerk-Domain kommende Pfadberechnungsanforderung - nachfolgend abgekürzt als Pcreq bezeichnet - zu empfangen und zu verarbeiten, wobei die besagte Pfadberechnung auf einem Ameisenalgorithmus basiert, wobei das besagte Pfadberechnungselement Verarbeitungsmittel umfasst, die für das Durchführen der folgenden Schritte konfiguriert sind:

- Übertragen der Ameisen von Domain zu Domain, wobei die besagten Domains Eingangs- und Ausgangsknoten aufweisen, die über Verbindungsabschnitte miteinander verbunden sind, wobei jede Ameise einen Parameter für die verbleibende QoS und einen Gesamtkostenparameter hat,
- Abziehen der geforderten QoS für einen Verbindungsabschnitt von dem Parameter der verbleibenden QoS,
- Hinzuaddieren der Kosten eines Verbindungsabschnitts zu dem Gesamtkostenparameter,
- am Zielort, Auswählen der Ameisen mit einer positiven verbleibenden QoS und Ermitteln eines Pegels von zugeteilten Pheromonen,
- Aktualisieren des Pheromonpegels entlang der Ameisenpfade.

8. Pfadberechnungselement einer Netzwerk-Domain nach Anspruch 7, wobei das PCE der Ziel-Domain einen bevorzugten Pfad in Abhängigkeit von mindestens einem Auswahlparameter auswählt.

**Revendications**

1. Procédé d'établissement d'une connexion d'un noeud d'entrée vers un noeud de sortie dans des réseaux multi-domaines permettant l'application de contraintes de qualité de service de bout en bout - QoS en abrégé - dans lequel les contraintes QoS sont définies par des accords de niveau de service - SLA en abrégé -, des calculs de chemin étant réalisés par un algorithme de fourmi heuristique, dans lequel les fourmis dudit algorithme comprennent la liste de paramètres non exhaustive suivante :

- un ID de fourmi,
- un ID source,
- un ID cible,
- un critère de sélection,
- un paramètre de QoS restante permettant ainsi de préserver la confidentialité des contraintes QoS des autres domaines et,
- un paramètre de coût total,
ledit procédé comprenant les étapes suivantes :

- les fourmis sont transmises d'un domaine à un autre, lesdits domaines possédant des noeuds d'entrée et de sortie connectés l'un à l'autre par des liaisons, la QoS requise d'une liaison étant déduite du paramètre de QoS restante et le coût d'une liaison étant ajouté au paramètre de coût total,
- à destination, les fourmis ayant une QoS restante positive sont sélectionnées et un niveau de phéromones accordées est déterminé,
- les fourmis sont transmises en arrière afin de mettre à jour le niveau de phéromones.

2. Procédé d'établissement d'une connexion d'un noeud d'entrée à un noeud de sortie dans des réseaux multi-domaines conformément à la revendication 1, dans lequel ledit procédé est un procédé distribué de sorte que chacun des domaines concernés par la demande QoS de bout en bout réalise une partie du calcul SLA.

3. Procédé d'établissement d'une connexion d'un noeud d'entrée à un noeud de sortie dans des réseaux multi-domaines conformément aux revendications 1 ou 2, dans lequel ledit calcul de chemin est un chemin contraint multidimensionnel.

4. Procédé d'établissement d'une connexion d'un noeud d'entrée à un noeud de sortie dans des réseaux multi-domaines conformément à l'une des revendications précédentes, dans lequel les fourmis comprennent également la liste de paramètres non exhaustive suivante :

- au moins un paramètre de pondération des phéromones,
- un paramètre d'évaporation des phéromones,
- un paramètre du niveau minimum de phéromones,
- un paramètre du niveau maximum de phéromones,

5. Procédé d'établissement d'une connexion d'un noeud d'entrée à un noeud de sortie dans des réseaux multi-domaines conformément à l'une des revendications précédentes, dans lequel le calcul de chemin est réalisé au niveau d'une couche de service.

6. Procédé d'établissement d'une connexion d'un noeud d'entrée à un noeud de sortie dans des réseaux multi-domaines conformément à l'une des revendications précédentes, dans lequel le calcul de chemin est réalisé à l'aide d'éléments de calcul de chemin - PCE en abrégé.

7. Élément de calcul de chemin - PCE en abrégé - d'un domaine de réseau dans lequel ledit élément de calcul de chemin est en mesure de recevoir et de traiter une demande de calcul de chemin - Pcreq en abrégé - issue d'un autre domaine de réseau, ledit calcul de chemin étant basé sur un algorithme de fourmi, ledit élément de calcul de chemin comprenant des moyens de traitement configurés pour réaliser :

- une transmission des fourmis d'un domaine à un autre, lesdits domaines possédant un noeud d'entrée et un noeud de sortie connectés l'un à l'autre par des liaisons, chaque fourmi comprenant un paramètre de QoS restante et un paramètre de coût total,
- la déduction de la QoS requise pour une liaison à partir du paramètre de QoS restante,
- l'ajout du coût d'une liaison au paramètre de coût total,
- à destination, la sélection des fourmis présentant une QoS restante positive et la détermination d'un niveau de phéromones accordées,
- la mise à jour du niveau de phéromones le long des chemins de fourmis.

8. Élément de calcul de chemin d'un domaine de réseau conformément à la revendication 7, dans lequel le PCE du domaine cible sélectionne un chemin préféré en fonction d'au moins un paramètre de sélection.

**Fig.1**

EP 2 159 974 B1

| Data carried by an ant | Source | Target | AntId | Remaining QoS | Total cost | best | $\alpha$ | $\beta$ | $\rho$ | $\tau_{max}$ | $\tau_{min}$ |
|---|---|---|---|---|---|---|---|---|---|---|---|

**Fig.2**

Fig.3

Fig.4

BRT0288EP (803112)

EP 2 159 974 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080049751 A

### Non-patent literature cited in the description

- **H.POUYLLAU ; L.CIARLETTA ; A. AGHASARYAN ; S.HAAR.** X-domain QoS budget negotiation using dynamic programming. *IEEE Advanced international conference on telecommunications,* 2006
- **I. MUKHOPADHYAY ; H POUYLLAU.** Distributed Optimization algorithms for X-Domain end-to-end QoS negotiation. *AICT,* 2008
- **M.P.HOWARTH ; M.BOUCADAIR ; P.FLEGKAS ; N.WANG ; G.PAVLOU ; P.MORAND ; T.COADIC ; D.GRIFFIN ; A.ASGARI ; P.GEORGATSOS.** End-to-end quality of service provisioning through inter-provider traffic engineering. *Computer communications,* 2006, vol. 29, 683-702
- **ZHANG SUBING ; LIU ZEMIN.** A QoS routing algorithm based on ant algorithm. *ICC,* 2001